# EUROPEAN PATENT SPECIFICATION

(11) **EP 2 485 970 B1**
(45) Date of publication and mention of the grant of the patent: **12.03.2014**
(21) Application number: 10763070.9
(22) Date of filing: 05.10.2010
(51) Int. Cl.: B65G 1/137

(54) **SYSTEM FOR COLLECTING DIFFERENT PRODUCTS OF AN ORDER IN A DESIRED ORDER**
SYSTEM ZUM SAMMELN VERSCHIEDENER PRODUKTE EINES AUFTRAGS IN EINER GEWÜNSCHTEN REIHENFOLGE
SYSTÈME DE COLLECTE DE DIFFÉRENTS PRODUITS D'UNE COMMANDE DANS UN ORDRE SOUHAITÉ

(30) Priority: 09.10.2009 NL 1037379
(43) Date of publication of application: 15.08.2012
(73) Proprietor: Vanderlande Industries B.V., 5466 RB Veghel (NL)
(72) Inventor: HENDRIKS, Karel Adrianus Franciscus, NL-5482 XC Schijndel (NL); VISSERS, Johannes Petrus Maria, NL-5622 EC Eindhoven (NL)
(74) Representative: Algemeen Octrooi- en Merkenbureau B.V.
(86) International application number: PCT/NL2010/050646
(87) International publication number: WO 2011/043655

(56) References cited:
- EP-A1- 1 462 393
- WO-A1-2008/119497

## Description

The present invention relates to a system according to the preamble of claim 1. The collecting of different products of an order is in particular of relevance in so-called "warehouse and distribution" systems, where different products are collected from a warehouse at a collecting location. The collecting of products In a desired order is in particular relevant if the products are to be stacked on a pallet at the collecting location. In order to be able to load the pallet in a stable and efficient manner, it may be important, for example, that heavier and/or larger products be placed at the bottom of the pallet and that the smaller and lighter products be stacked on top thereof. If the stacking of products on a pallet takes place in an automated process, it is essential that the products be supplied in the correct order, whilst in the case of mechanized or manual stacking of products it is at least advantageous if the products are supplied in an order that facilitates the stacking process. Another reason for collecting different products of an order in a desired order at a stacking station may be an end user's wish to be able to unload a pallet that has been loaded at the stacking station in a desired order, in particular in view of the logistic advantages thereof, such as may be the case in a supermarket, for example. The desired order thus depends on the objective in question.

A process is known wherein, in order to eventually collect different products of an order in a desired order, the products of an order are first supplied to a stacking station in a random order, which products are then arranged in the desired order by means of a so-called sequencer just before the stacking station. The use of such sequencers increases the cost price, whilst in addition the sequencers take up additional space. As an alternative to the use of such sequencers it is also known to supply products directly in a desired order to a stacking station. A system for doing so is described in International patent application WO 2008/119497 A1. Said system makes use of a product conveyor on which virtual windows are defined by a control system, with products being collected in a desired order in successive windows. The product conveyor extends parallel to and between two parallel pairs of racks, each rack comprising a plurality of tray storage positions arranged beside and above each other. Each tray storage position is capable of accommodating a tray carrying identical products. To collect said products on the product conveyor, use is made of a number of stationary tray lifts distributed along the length of the racks, which tray lifts are disposed between the product conveyor and the rack of each pair of racks located on the side of the product conveyor, directly adjacent to the rack in question and at some distance from the product conveyor. A bridge conveyor is provided between each tray lift and the product conveyor for conveying products from the associated tray lift to the product conveyor. Said conveyors extend perpendicularly to the product conveyor and, because of their limited length, have a limited buffering capacity. Provided above and beside each other between the racks associated with each pair of racks are further tray lifts which are movable in the longitudinal direction of the racks and which are capable of removing trays from tray storage positions and placing said trays at a transfer position that can be reached by a tray lift, and vice versa. The tray lift is designed to pick up trays from a transfer position in a rack where the tray in question was put out by a further tray lift. The tray lift vertically moves the tray with products present thereon in its entirety to the level of the associated bridge conveyor. At said bridge conveyor, one product or a number of products are removed from the tray and transferred to the respective bridge conveyor in an automated process. The tray lift then returns the tray to a transfer position, after which a movable further tray lift moves the tray to a tray storage position outside the reach of the tray lift or, if the tray is empty, to a discharge location.

The prior art system as described above has significant drawbacks. Said drawbacks are in particular connected with the fact that relatively much hardware is needed in order to realise an acceptable capacity. This means that the risk of malfunctions is relatively great, whilst in addition the cost price is relatively high. Furthermore, the space in which the system is disposed is not utilized in an efficient manner, because there is a relatively great deal of wasted space. In addition to that the system is not a very flexible one, so that there is a great risk of such a malfunction leading to failure of at least a significant part of the system, possibly resulting in a temporary dramatic loss of capacity. For example, in the unwished-for situation of the automated transfer of a product from the tray to a bridging conveyor not taking place correctly, for example as a result of the product in question falling over, this will quickly lead to a hold-up in the supply of products from the bridge conveyor to the product conveyor, partially in view of the limited buffering capacity of the bridge conveyors, as a consequence of which the product conveyor and also the other bridge conveyors that connect to the product conveyor must inevitably be stopped, as must the tray lifts disposed upstream of said bridge conveyors.

A system according to the preamble of claim 1 is known from publication EP 1 462 393 A1.

It is a first object of the present invention to eliminate or at least reduce at least some of the above drawbacks. In order to accomplish that object, the invention provides a system as defined in claim 1. Significant advantages that are achieved in this way are connected with the fact that the manipulation of trays is minimized in a system according to the invention. As a result, a saving is realized not only on the required hardware but also of the time required for moving a random product from a tray storage position to the product conveyor. In addition to that, the system according to the invention provides a possibility of realising a considerable buffering capacity on the buffer conveyors. A possible temporary breakdown of a product lift will thus less easily have consequences as regards the supply of products to the product conveyor. The use of the individually drivable conveyor means further has a positive effect on the reliability or; in other words, the extent to which the system is sensitive to local malfunctions.

The product conveyor preferably extends perpendicularly to the racks, at least at the location of the discharge positions.

It is furthermore preferable in that regard if the product conveyor is disposed completely outside the tray warehouse, so that the product conveyor need not be stopped in case of a malfunction at one of the racks or between the racks, for example of a lift. In this connection it is noted that the tray warehouse is considered to take up the space between the outermost racks, including the space taken up by the outermost racks themselves. Another advantage of the present preferred embodiment is the easy accessibility of the product conveyor, so that a lack of space will not hamper any maintenance work that needs to be carried out. In addition, the regular operation of the system in the tray warehouse can normally continue, at least temporarily so, during such maintenance work.

An advantageous use of the available space is achieved if the buffer conveyors extend within the depth of a rack along at least part of their length. Since the buffer conveyor extends at least in part through the rack, the racks and the lifts that are movable between said racks can be positioned relatively close together.

In order to limit the length of the distance covered by a product between a tray storage position and a buffer conveyor, it is preferable if starting points of buffer conveyors are located at different positions along the length of the racks.

It is furthermore preferable if two buffer conveyors discharge onto the product conveyor at least substantially at the same position, making it possible to reduce the amount of hardware required for transferring products from the two buffer conveyors to the product conveyor.

A very compact setup is realised if two buffer conveyors, whose starting points may be, but need not be, located at different longitudinal positions of the racks, and which discharge onto the product conveyor at least substantially at the same position, extend alongside each other within the depth of a rack along at least part of their length.

In order to have the loading of a buffer conveyor from a product lift take place independently of the transferral of a product from the buffer conveyor to the product conveyor, it is preferable if the buffer conveyors each comprise a number of individually drivable buffer conveying elements that connect to each other.

The first conveying means preferably comprise at least one tray lift which is movable in the longitudinal direction of the racks, which tray lift is provided with at least one further supporting arm capable of forward and backward movement in directions transversely to the longitudinal direction of the racks for supplying a loaded tray to a tray storage position and discharging an empty tray from a tray storage position.

Said at least one product lift and said at least one tray lift are preferably provided in alternating relationship between the racks.

According to a very advantageous preferred embodiment, the second conveying means comprise at least two product lifts which can be moved along the same path in the longitudinal direction of a rack. The product lifts in question can each cover one half of the length of the rack in question during normal operation, whilst a lift can be moved to a position such that the other product lift can cover the entire length of the rack in a situation in which said lift is temporarily unavailable.

The present invention also relates to a method for operating the system according to the invention as described in the foregoing. The method according to the invention comprises the steps defined in claim 11. Said steps make it possible to handle exceptional situations, such as may occur when a product is being moved from a tray storage position to a buffer conveyor, in a simple manner and without any major adverse consequences for the collecting process. Such exceptional situations may concern the falling over of a product, for example, or the detection of the fact that the actual weight of the product differs from the normal weight of the product, for example because a package is damaged and its contents have run out.

The invention will be explained in more detail hereinafter by means of a description of a preferred embodiment of the invention. In the description of said preferred embodiment, reference will be made to the following figures:
Figure 1 is a schematic top plan view of a collecting system according to a preferred embodiment of the invention;
Figure 2 is a schematic top plan view, showing four successive situations I-IV in a part of the collecting station of figure 1 during use thereof.

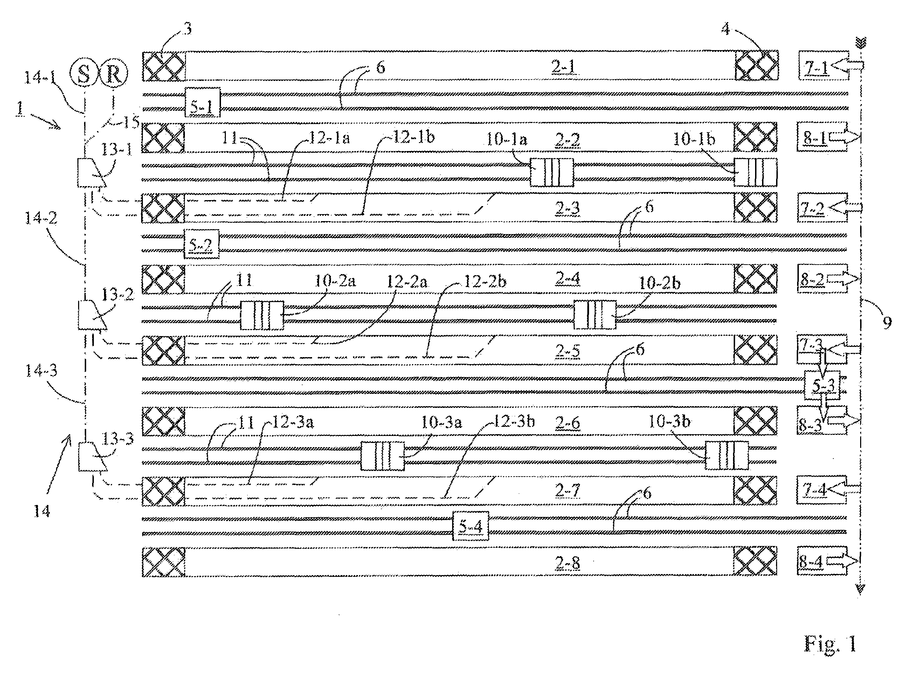

The collecting station 1 shown in figure 1 comprises a tray warehouse provided with eight racks 2, indicated 2-1 through 2-8. Said racks 2 extend parallel to each other and are each provided with tray storage positions arranged beside and above each other, which tray storage positions are not shown but which are known to those skilled in the art. A tray loaded with a layer of identical products may be accommodated in each tray storage position. No tray storage positions are present at the locations indicated at 3, 4 at the ends of the racks 2, instead thereof the racks 2 are strengthened with diagonal members so as to impart the required stiffness to the racks 2.

Four tray lifts 5 (5-1 through 5-4) are provided between the racks 2-1 and 2-2, 2-3 and 2-4, 2-5 and 2-6, 2-7 and 2-8, respectively, which tray lifts are movable over guides 6 in the longitudinal direction of the racks 2. Said guides 6 extend from the ends 3 of the racks 2 to beyond the ends 4, where a pair of transfer stations 7, 8 (7-1 through 7-4, 8-1 through 8-4) are provided on either side for each tray lift 5. The transfer stations 7 are designed to take over filled trays from the tray conveyor 9 and in turn transfer the filled trays to a movable tray lift 5 when said tray lift 5 is positioned between the associated transfer stations 7 and 8, as is shown for the tray lift 5-3 in figure 1. The transfer stations 8 are designed to take over empty (or possibly filled) trays from a tray lift 5 and in turn transfer said trays to the tray conveyor 9.

Two product lifts 10 (10-1 a and 10-1b, 10-2a and 10-2b, 10-3a and 10-3b) are provided between each of the respective rack pairs 2-2 and 2-3, 2-4 and 2-5, 2-6 and 2-7, which products lifts are movable in the longitudinal direction of the racks 2 along guides 11 whose length corresponds to the length of the racks 2.

The height of the lifts 5 and 10 is the same as that of the racks 2, so that all the rack positions of the rack 2 disposed beside a lift 5, 10 can be reached by the lift 5, 10 in question. The product lifts 10 are provided with arms which can reach to within the rack positions of the adjacent racks for picking up one or a number of (identical) products from a tray in a tray storage position and delivering said product or products to one of the two buffer conveyors 12-a, 12-b, as will be explained yet hereinafter. For an example of a possible configuration of the product lifts 10, reference is made to Dutch patent application NL 1036522, in which such a product lift is indicated at 54 in the description of the figures.

In principle the three left-hand product lifts 10-a in figure 1 cover the left half of the racks 2 in question, whilst the three right-hand product lifts 10-b cover the right half of the racks 2 in question. If, however, one of the product lifts 10-a, 10-b, which travel along the same guide 11, should break down and require maintenance, the product lift 10-a, 10-b in question-will be moved to one end 3, 4 of the racks 2, after which the other product lift 10-b, 10-a can reach all the tray storage positions of the adjacent racks 2. In the meantime the maintenance work on the other product lift 10-a, 10b, which is disposed outside the work area of the product lift 10 that is still operative, can be carried out. In figure 1 this is shown for the product lifts 10-1a (operative along the entire length of the racks 2-2 and 2-3) and 10-1 b (undergoing maintenance work between the ends 4 of the racks 2-2 and 2-3).

The collecting system 1 further comprises a buffer conveyor 12-1a and 12-1b, 12-2a and 12-2b, and 12-3a and 12-3b for each pair of product lifts 10a, 10b. During normal operation the product lifts 10 discharge onto one buffer conveyor 12. Thus, the buffer conveyors 12-a in principle only receive products from the left half of the racks 2 via the product lifts 10-a, whilst the buffer conveyors 12-b only receive products from the right half of the racks 2 via the product lifts 10-b. The buffer conveyors 12 extend within the depth of the racks 2-3, 2-5 and 2-7, respectively. The buffer conveyors 12a, 12b extend alongside each other along part of their length, so that the maximum width of each buffer conveyor 12 amounts to at most half the depth of the racks 2. It will be apparent to those skilled in the art that there will be no tray storage positions at those locations where the buffer conveyors 12 extend through the racks 2-3, 2-5 and 2-7. The buffer conveyors 12 thus extend parallel to the racks 2, at least along a significant part of their length. The buffer conveyors 12 terminate at one of three combining stations 13-1, 13-2 and 13-3, which combining stations 13 form part of a product conveyor 14. Downstream of the respective combining stations 13, the product conveyor 14 comprises an individually drivable product conveying element 14-1, 14-2 and 14-3, which may be configured as an endless conveyor belt, for example. A return conveyor 15 branches off the product conveying element 14-3. The product conveyor 14 terminates at the stacking station S, whilst the return conveyor 15 extends to a return station R, from where products are further handled, for example by returning them to a tray, which can in turn be stored in one of the tray storage positions in one of the racks 2.

An important advantage of the fact that the buffer conveyors 12 extend along a considerable part, for example at least 25%, of the length of the racks 2 is that the buffer conveyors 12 thus have a considerable buffering capacity. In fact, the buffer conveyors 12 will advantageously be configured as a number of, for example four, individually drivable product conveying elements, preferably endless conveyor belts, which connect to one another. The buffer conveyors 12 are thus capable of receiving products from a product lift 10 and delivering them to a combining station 13 either simultaneously or, quite the opposite, at different points in time. In addition to that it is furthermore advantageous to realise an even finer-meshed division of each buffer conveyor 12 on the side of the product lifts 10, so that products which are simultaneously delivered to a buffer conveyor 12 by a product lift 10 can be pulled apart, as it were, so that a certain spacing is realised, which facilitates the further automated manipulation of the products in question. It should be realised in that regard that the products on the product lifts 10 are preferably spaced as close together as possible in order to thus achieve a maximum degree of capacity utilisation of the product lift 10.

The racks 2-1 and 2-8 are slightly different, not so much as regards their design but as regards their nature, from the other intermediate racks 2-2 through 2-7, beside each of which a tray lift 5 as well as two product lifts 10 are disposed. Because of this difference that tray storage positions in the rack 2-1 cannot be directly accessed by a product lift 10. In order to enable one of the product lifts 10-1 a or 10-1b to access the products present on a tray in a tray storage position of the rack 2-1 all the same , the tray lift 5-1 removes the tray in question from the tray storage position 2-1 and transfers it to a tray storage position in the rack 2-2. A similar situation applies as regards the rack 2-8. Products present on a tray in a tray storage position of the rack 2-8 are transferred by the tray lift 5-4 to a tray storage position in the rack 2-7, where the products in question can be picked up by one of the product lifts 10-3a, 10-3b to be subsequently delivered to one of the buffer conveyors 12-3a and 12-3b.

In an alternative embodiment, the product lifts 10 are only capable of picking up products from trays in a tray storage position on one side (rather than on two sides) of the product lift 10 in question, viz. from the rack 2 through which also the buffer conveyors 12 extend. Put concretely, the product lifts 10-1a, 10-1b can only pick up products from the rack 2-3, the product lifts 10-2a, 10-2b can only pick up products from the rack 2-5 and the product lifts 10-3a, 10-3b can only pick up products from the rack 2-7 in that case. In such a situation the tray lifts 5 have a more active role, since the tray lift 5-2 transfers trays from the rack 2-4 to the rack 2-3, where the product lifts 10-1a and 10-1b can pick up the product in question, and the tray lift 5-3 will transfer trays from the rack 2-6 to the rack 2-5, from where the products in question can be accessed by one of the product lifts 10-2a or 10-2b. Also in the starting situation, trays were transferred from the rack 2-8 to the rack 2-7 by the tray lift 5-4. In the present alternative embodiment, the racks 2-1 and 2-2 cannot be accessed by one of the product lifts 10. In order to make it possible to access the products in question all the same, the trays on which the products in question are present need to be picked up by the tray lift 5-1, which subsequently transfers the tray in question, via the transfer station 8-1, to the tray conveyor 9, after which the tray in question can be taken to a tray storage position in one of the racks 2-3 through 2-8 via one of the transfer stations 7-2 through 7-4 and via the associated tray lifts 5-2 through 5-4.

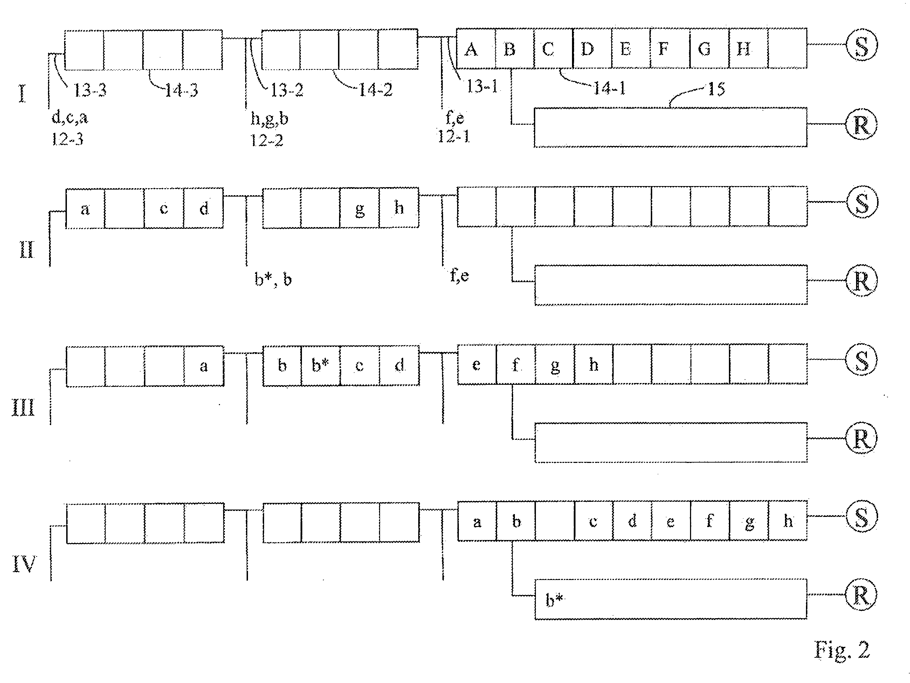

With reference now to figure 2, a description will be given of the way in which the collecting station 1 can be used in practice. Roman numeral I indicates a starting situation. The control system for the collecting system 1 divides the product conveyor 14 into virtual windows. Each window provides space for one product, in which connection it is noted for the sake of completeness that one product may in fact also consist of a number of bundled products. In this example, the length of the conveying elements 14-2 and 14-3 provides space for four windows, but it will be understood that this number is not essential. The conveying element 14-1 is shown to comprise nine windows, but in fact said number may be much larger, and the conveying element 14-1 may continue in one piece to the stacking station S.

The starting situation is that the control system receives a command to collect the products a-h at the stacking station S. The control system determines the order in which the products a-h are to be supplied to the stacking station S either to allow optimal stacking of the products or to allow optimal destacking thereof by an end user. In the present example, the desired order as determined by the control system is shown in capital letters on the conveying element 14-1 for the situation I in figure 2. Ideally, the products a-h would be collected on the associated windows AH, after which they can be conveyed to the stacking station S. The control system then determines from which racks the respective products a-h are to be removed. In the present example, the outcome of said analysis is that the products a, c, d will be supplied via one of the buffer conveyors 12-3, that the products b, g, h will be supplied via one of the buffer conveyors 12-2 and that the products e, f will be supplied via one of the buffer conveyors 12-1.

Situation II shows the products d, c and a being loaded on the conveying element 14-3 of the product conveyor 14 and the products g and h being loaded on the conveying element 14-2 of the product conveyor 14. Windows have been left open for the products b, e and f. Product b can thus be loaded on the product conveyor 14 once product c has passed the combining station 39-2, whilst the products f and e can be successively loaded on the product conveyor 14 once product g has passed the combining station 13-1.

In the present example, as can happen in practice, product b has presumably not been picked up correctly by the product lift 10-2 upon being removed from one of the tray storage positions of one of the racks 2-4, 2-5, it has fallen over, for example, or is not correctly oriented. This involves a certain risk, which the control system can detect by means of sensors. In response to this exceptional situation, the control system holds the product b in question to be "suspect", which is indicated at b* in figure 2. In further response thereto, the control system commands the product lift 10-2 to collect a second product b from one of the racks 2-4, 2-5, which product is placed directly behind product b*. When the product conveyor 14 moves further ahead, product b* as well as product b are placed between products a and c on the product conveyor 14, to which end an additional window is created between products a and c by stopping the conveying element 14-3 slightly longer.

The product conveyor 14 then conveys all the successive products a, b, b*, c-h further ahead, after which the suspect product b* is removed from the conveying element 14-1 and placed on the return conveyor 15. Products a-h , being arranged in the correct order on the product conveyor 14, continue on their way on said product conveyor. By dividing the conveying element 14-1, too, into a number of further independently operable conveying elements connecting to one another, it is also possible, if desired, to remove the empty window between product b and product c, as the skilled person will appreciate. Thus it is possible to supply an unbroken series of products a-h to the stacking station S.

## Claims

1. A system for collecting different products of an order in a desired order, which system comprises:
- a tray warehouse provided with number of racks (2) extending parallel to each other, each rack comprising a plurality of tray storage positions arranged beside and above each other,
- first conveying means (5-8) for conveying trays carrying a layer of identical products to a tray storage position of the tray warehouse and for conveying empty trays from a tray storage position,
a stacking station (S) for stacking the products of the order collected from trays in the tray warehouse on a collecting pallet in the desired order,
- second conveying means for conveying products from the tray warehouse to the stacking station in the desired order, which second conveying means comprise a number of buffer conveyors (12) which extend at least substantially parallel to the racks, transfer means (10) for transferring products from a tray in a tray storage position of the tray warehouse to a buffer conveyor, which transfer means comprise at least one product lift (10) which is movable in the longitudinal direction of the racks, which product lift is provided with at least one supporting arm capable of forward and backward movement in directions transversely to the racks for picking up at least one product from a tray that is stored in a tray position of a rack disposed beside the product lift, said second conveying means further comprising a product conveyor (14) onto which the buffer conveyors discharge at discharge positions, which product conveyor is designed to convey products from discharge positions to the stacking station, and
- control means for controlling the system, **characterized in that** the product conveyor comprises individually drivable product conveying elements (14-1, 14-2, 14-3) between at least some of the discharge positions.

2. A system according to claim 1, **characterised in that** the product conveyor (14) extends perpendicularly to the racks (2), at least at the location of the discharge positions.

3. A system according to claim 1 or 2, **characterised in that** the product conveyor (14) is disposed completely outside the tray warehouse.

4. A system according to any one of the preceding claims, **characterised in that** the buffer conveyors (12) extend within the depth of a rack (2) along at least part of their length.

5. A system according to any one of the preceding claims, **characterised in that** starting points of buffer conveyors (12) are located at different positions along the length of the racks (2).

6. A system according to any one of the preceding claims, **characterised in that** two buffer conveyors (12) discharge onto the product conveyor (14) at least substantially at the same position.

7. A system according to any one of the preceding claims, **characterised in that** two buffer conveyors (12) extend alongside each other within the depth of a rack (2) along at least part of their length.

8. A system according to any one of the preceding claims, **characterised in that** the buffer conveyors (12) each comprise a number of individually drivable buffer conveying elements that connect to each other.

9. A system according to any one of the preceding claims, **characterised in that** the first conveying means comprise at least one tray lift (5) which is movable in the longitudinal direction of the racks, which tray lift is provided with at least one further supporting arm capable of forward and backward movement in directions transversely to the longitudinal direction of the racks for supplying a loaded tray to a tray storage position and discharging an empty tray from a tray storage position.

10. A system according to claim 9 **characterised in that** said at least one product lift (10) and said at least one tray lift (5) are provided in alternating relationship between the racks.

11. A system according to any one of the preceding claims, **characterised in that** the second conveying means comprise at least two product lifts (10a, 10b) which can be moved along the same path in the longitudinal direction of a rack.

12. A method for operating a system according to any one of the preceding claims, comprising the steps of:
- issuing an order to the control system to collect a number of products,
- the control system determining a desired order in which the products of an order are to be collected,
- reserving successive windows on the product conveyor (14), the number of said windows corresponding to the number of products included in the order,
- the control system determining from which racks (2), more specifically from which tray storage positions thereof, the products of the order are to be removed,
- the product lifts (10) removing the products of the order from the tray storage positions in question,
- the product lifts (10) transferring the products removed from the tray storage positions to an associated buffer conveyor (12),
- the control means monitoring the removal of products from tray storage positions by the product lifts (10) and the product lifts (10) transferring said products to the associated buffer conveyor (12),
- the control system holding a product to be "suspect" if it has been found during said monitoring that an exceptional situation has occurred,
- the control system, in response to a product being held "suspect", issuing a command to a product lift (10) to collect a second specimen of the product in question and to place said product directly behind the "suspect" product on the buffer conveyor (12).
- creating an additional window downstream of the window reserved for the "suspect" product by individually and suitably controlling the product conveyor (14).
- the associated buffer conveyors (12) supplying the products to the product conveyor (14) in the desired order, wherein, if a product has been held to be "suspect" by the control system, said second specimen is supplied to the additionally created window,
- discharging the "suspect" product from the product conveyor (14) at a location upstream of the stacking station (S).

## Patentansprüche

1. System zum Sammeln verschiedener Produkte eines Auftrags in einer gewünschten Reihenfolge, wobei das System umfasst:
- ein mit mehreren Regalen (2) versehenes Tablarlager, die sich parallel zueinander erstrecken, wobei jedes Regal mehrere Tablarlagerungspositionen aufweist, die nebeneinander und übereinander angeordnet sind,
- erste Fördermittel (5-8) zum Fördern von Tablaren, die eine Lage identischer Produkte tragen, zu einer Tablarlagerungsposition des Tablarlagers und zum Fördern leerer Tablare aus einer Tablarlagerungsposition,
- eine Stapelstation (S) zum Stapeln der von Tablaren im Tablarlager gesammelten Produkte des Auftrags auf eine Sammelpalette in der gewünschten Reihenfolge,
- zweite Fördermittel zum Fördern von Produkten vom Tablarlager zur Stapelstation in der gewünschten Reihenfolge, wobei die zweiten Fördermittel mehrere Pufferförderer (12), die sich zumindest im Wesentlichen parallel zu den Regalen erstrecken, und Überführungsmittel (10) zum Überführen von Produkten von einem Tablar in einer Tablarlagerungsposition des Tablarlagers zu einem Pufferförderer umfassen, wobei die Überführungsmittel wenigstens einen Produktlift (10) aufweisen, der in Längsrichtung der Regale bewegbar ist, wobei der Produktlift mit wenigstens einem Tragarm versehen ist, der zu Vorwärts- und Rückwärtsbewegungen in Richtungen quer zu den Regalen in der Lage ist, um wenigstens ein Produkt von einem Tablar aufzunehmen, das in einer Tablarposition eines Regals gelagert ist, das neben dem Produktlift angeordnet ist, wobei die zweiten Fördermittel ferner einen Produktförderer (14) aufweisen, auf den die Pufferförderer an Abladepositionen abladen, wobei der Produktförderer zum Fördern von Produkten aus Abladepositionen zur Stapelstation ausgebildet ist, und
- Steuermittel zum Steuern des Systems,
**dadurch gekennzeichnet, dass**
der Produktförderer individuell antreibbare Produktförderelemente (14-1, 14-2, 14-3) zwischen wenigstens einigen der Abladepositionen aufweist.

2. System nach Anspruch 1, **dadurch gekennzeichnet, dass** sich der Produktförderer (14) zumindest am Ort der Abladepositionen senkrecht zu den Regalen (2) erstreckt.

3. System nach Anspruch 1 oder 2, **dadurch gekennzeichnet, dass** der Produktförderer (14) vollständig außerhalb des Tablarlagers angeordnet ist.

4. System nach einem der vorhergehenden Ansprüche, **dadurch gekennzeichnet, dass** sich die Pufferförderer (12) entlang wenigstens eines Teils ihrer Länge in die Tiefe eines Regals (2) erstrecken.

5. System nach einem der vorhergehenden Ansprüche, **dadurch gekennzeichnet, dass** Startpunkte von Pufferförderern (12) an verschiedenen Positionen entlang der Länge der Regale (2) gelegen sind.

6. System nach einem der vorhergehenden Ansprüche, **dadurch gekennzeichnet, dass** zwei Pufferförderer (12) wenigstens im Wesentlichen an derselben Position auf den Produktförderer abladen.

7. System nach einem der vorhergehenden Ansprüche, **dadurch gekennzeichnet, dass** sich zwei Pufferförderer (12) längsseitig zueinander entlang wenigstens eines Teils ihrer Länge in die Tiefe eines Regals (2) erstrecken.

8. System nach einem der vorhergehenden Ansprüche, **dadurch gekennzeichnet, dass** die Pufferförderer (12) jeweils mehrere individuell antreibbare Pufferförderelemente umfassen, die miteinander in Verbindung stehen.

9. System nach einem der vorhergehenden Ansprüche, **dadurch gekennzeichnet, dass** die ersten Fördermittel wenigstens einen Tablarlift (5) aufweisen, der in Längsrichtung der Regale bewegbar ist, wobei der Tablarlift mit wenigstens einem weiteren Tragarm versehen ist, der zu Vorwärts- und Rückwärtsbewegungen in Richtungen quer zur Längsrichtung der Regale in der Lage ist, um ein beladenes Tablar in eine Tablarlagerungsposition zu überführen und um ein leeres Tablar aus einer Tablarlagerungsposition abzuführen.

10. System nach Anspruch 9, **dadurch gekennzeichnet, dass** der wenigstens eine Produktlift (10) und der wenigstens eine Tablarlift (5) in abwechselndem Verhältnis zwischen den Regalen vorgesehen sind.

11. System nach einem der vorhergehenden Ansprüche, **dadurch gekennzeichnet, dass** die zweiten Fördermittel wenigstens zwei Produktlifte (10a, 10b) aufweisen, die entlang desselben Wegs in Längsrichtung eines Regals bewegt werden können.

12. Verfahren zum Betreiben eines Systems nach einem der vorhergehenden Ansprüche, mit den folgenden Schritten:
- Erteilen eines Auftrags an das Steuersystem, mehrere Produkte zu sammeln, wobei
- das Steuersystem eine gewünschte Reihenfolge ermittelt, in der die Produkte eines Auftrags zu sammeln sind,
- Reservieren aufeinanderfolgender Fenster auf dem Produktförderer (14), wobei die Anzahl der Fenster der Anzahl an im Auftrag enthaltenen Produkten entspricht, wobei
- das Steuersystem ermittelt, aus welchen Regalen (2), insbesondere aus welchen ihrer Tablarlagerungspositionen, die Produkte des Auftrags zu entnehmen sind, wobei
- die Produktlifte (10) die Produkte des Auftrags aus den betreffenden Tablarlagerungspositionen entnehmen, wobei
- die Produktlifte (10) die aus den Tablarlagerungspositionen entnommenen Produkte auf einen zugeordneten Pufferförderer (12) überführen, wobei
- die Steuermittel die Entnahme von Produkten aus Tablarlagerungspositionen durch die Produktlifte (10) und die Produktlifte (10) überwachen, die die Produkte auf den zugeordneten Pufferförderer (12) überführen, wobei
- das Steuersystem ein Produkt für "verdächtig" hält, wenn während der Überwachung festgestellt worden ist, dass eine außergewöhnliche Situation aufgetreten ist, wobei
- das Steuersystem als Reaktion darauf, dass ein Produkt für "verdächtig" gehalten worden ist, einen Befehl an einen Produktlift (10) ausgibt, ein zweites Exemplar des betreffenden Produkts zu sammeln und dieses Produkt direkt hinter das "verdächtige" Produkt auf den Pufferförderer (12) zu platzieren,
- Schaffen eines zusätzlichen, dem für das "verdächtige" Produkt reservierten Fenster nachgelagerten Fensters, indem der Produktförderer (14) individuell und entsprechend gesteuert wird, wobei
- die zugeordneten Pufferförderer (12) die Produkte in der gewünschten Reihenfolge dem Produktförderer (14) zuführen, wobei das zweite Exemplar dem zusätzlich geschaffenen Fenster zugeführt wird, wenn ein Produkt vom Steuersystem für "verdächtig" gehalten worden ist, und
- Abladen des "verdächtigen" Produkts vom Produktförderer (14) an einem der Stapelstation (S) vorgelagerten Ort.

## Revendications

1. Système de collecte de différents produits d'une commande dans un ordre souhaité, lequel système comprend :
- un entrepôt à plateaux doté d'un certain nombre de rayonnages (2) s'étendant parallèlement les uns aux autres, chaque rayonnage comprenant une pluralité de positions de stockage de plateaux agencées à côté et au-dessus les unes des autres,
- des premiers moyens de convoyage (5-8) destinés à convoyer des plateaux portant une couche de produits identiques vers une position de stockage de plateaux de l'entrepôt à plateaux et à convoyer des plateaux vides depuis une position de stockage de plateaux,
- une station d'empilage (S) destinée à empiler les produits de la commande collectés depuis les plateaux dans l'entrepôt à plateaux sur une palette de collecte dans l'ordre souhaité,
- des seconds moyens de convoyages destinés à convoyer des produits de l'entrepôt à plateaux vers la station d'empilage dans l'ordre souhaité, lesquels seconds moyens de convoyage comprennent un certain nombre de convoyeurs tampons (12) qui s'étendent au moins sensiblement parallèles aux rayonnages, des moyens de transfert (10) destinés à transférer des produits d'un plateau dans une position de stockage de plateaux de l'entrepôt à plateaux vers un convoyeur tampon, lesquels moyens de transfert comprennent au moins un élévateur de produits (10) qui est mobile dans la direction longitudinale des rayonnages, lequel élévateur de produits est doté d'au moins un bras de support pouvant effectuer un mouvement vers l'avant et vers l'arrière dans des directions transversales aux rayonnages afin de retirer au moins un produit d'un plateau qui est stocké dans une position de plateau d'un rayonnage disposé à côté de l'élévateur de produits, lesdits seconds moyens de convoyage comprenant en outre un convoyeur de produits (14) sur lequel les convoyeurs tampons déchargent en des positions de déchargement, lequel convoyeur de produits est conçu pour convoyer des produits des positions de déchargement vers la station d'empilage, et
- des moyens de commande destinés à commander le système, **caractérisé en ce que** le convoyeur de produits comprend des éléments de convoyage de produits pouvant être entraînés individuellement (14-1, 14-2, 14-3) entre au moins certaines des positions de déchargement.

2. Système selon la revendication 1, **caractérisé en ce que** le convoyeur de produits (14) s'étend perpendiculairement aux rayonnages (2), au moins à l'emplacement des positions de déchargement.

3. Système selon la revendication 1 ou 2, **caractérisé en ce que** le convoyeur de produits (14) est disposé complètement à l'extérieur de l'entrepôt à plateaux.

4. Système selon l'une quelconque des revendications précédentes, **caractérisé en ce que** les convoyeurs tampons (12) s'étendent à l'intérieur de la profondeur d'un rayonnage (2) sur au moins une partie de leur longueur.

5. Système selon l'une quelconque des revendications précédentes, **caractérisé en ce que** les points de départ de convoyeurs tampons (12) sont situés en différentes positions sur la longueur des rayonnages (2).

6. Système selon l'une quelconque des revendications précédentes, **caractérisé en ce que** deux convoyeurs tampons (12) déchargent sur le convoyeur de produits (14) au moins sensiblement en la même position.

7. Système selon l'une quelconque des revendications précédentes, **caractérisé en ce que** deux convoyeurs tampons (12) s'étendent l'un à côté de l'autre à l'intérieur de la profondeur d'un rayonnage (2) sur au moins une partie de leur longueur.

8. Système selon l'une quelconque des revendications précédentes, **caractérisé en ce que** les convoyeurs tampons (12) comprennent chacun un certain nombre d'éléments de convoyage tampon pouvant être entraînés individuellement qui se raccordent les uns aux autres.

9. Système selon l'une quelconque des revendications précédentes, **caractérisé en ce que** les premiers moyens de convoyage comprennent au moins un élévateur de plateau (5) qui est mobile dans la direction longitudinale des rayonnages, lequel élévateur de plateau est doté d'au moins un bras de support supplémentaire pouvant effectuer un mouvement vers l'avant et vers l'arrière dans des directions transversales à la direction longitudinale des rayonnages afin d'amener un plateau chargé vers une position de stockage de plateaux et de décharger un plateau vide d'une position de stockage de plateaux.

10. Système selon la revendication 9, **caractérisé en ce que** ledit au moins un élévateur de produits (10) et ledit au moins un élévateur de plateau (5) sont agencés dans une relation d'alternance entre les rayonnages.

11. Système selon l'une quelconque des revendications précédentes, **caractérisé en ce que** les seconds moyens de convoyage comprennent au moins deux élévateurs de produits (10a, 10b) qui peuvent être déplacés le long du même chemin dans la direction longitudinale d'un rayonnage.

12. Procédé d'exploitation d'un système selon l'une quelconque des revendications précédentes, comprenant les étapes consistant à :
- émettre une commande pour que le système de commande collecte un certain nombre de produits,
- déterminer, par le système de commande, un ordre souhaité dans lequel les produits d'une commande doivent être collectés,
- réserver des fenêtres successives sur le convoyeur de produits (14), le nombre desdites fenêtres correspondant au nombre de produits inclus dans la commande,
- déterminer, par le système de commande, à partir de quels rayonnages (2), plus spécifiquement à partir de quelles positions de stockage de plateaux de ceux-ci, les produits de la commande doivent-être enlevés,
- enlever, par élévateurs de produits (10), les produits de la commande des positions de stockage de plateaux en question,
- transférer, par les élévateurs de produits (10), les produits enlevés des positions de stockage de plateaux vers un convoyeur tampon (12) associé,
- surveiller, par le moyen de commande, l'enlèvement de produits de positions de stockage de plateaux par les élévateurs de produits (10) et transférer, par les élévateurs de produits (10), lesdits produits vers le convoyeur tampon (12) associé,
- considérer, par le système de commande, un produit comme étant « suspect » s'il s'est avéré pendant ladite surveillance qu'une situation exceptionnelle s'est produite,
- émettre, par le système de commande, en réponse à un produit considéré comme étant « suspect », une instruction à un élévateur de produits (10) afin qu'il collecte un second échantillon du produit en question et qu'il place ledit produit directement derrière le produit « suspect » sur le convoyeur tampon (12),
- créer une fenêtre supplémentaire en aval de la fenêtre réservée pour le produit « suspect » en commandant individuellement de façon adaptée le convoyeur de produits (14),
- amener, par les convoyeurs tampons (12) associés, les produits vers le convoyeur de produits (14) dans l'ordre souhaité, où, si un produit a été considéré comme étant « suspect » par le système de commande, ledit second échantillon est amené vers la fenêtre supplémentaire créée,
- décharger le produit « suspect » du convoyeur de produits (14) à un emplacement en amont de la station d'empilage (S).
